# EUROPÄISCHE PATENTSCHRIFT

(11) **EP 2 118 912 B1**
(45) Veröffentlichungstag und Bekanntmachung des Hinweises auf die Patenterteilung: **09.08.2017**
(21) Anmeldenummer: 08701687.9
(22) Anmeldetag: 11.02.2008
(51) Int. Cl.: H01C 7/18, H01C 1/142, H01G 4/30, H01G 4/232, H01G 4/12, H01G 4/005

(54) **VIELSCHICHT-BAUELEMENT UND VERFAHREN ZUR HERSTELLUNG EINES VIELSCHICHT-BAUELEMENTS**
MULTILAYER COMPONENT, AND METHOD FOR THE PRODUCTION OF A MULTILAYER COMPONENT
COMPOSANT MULTICOUCHE ET PROCÉDÉ DE PRODUCTION D'UN TEL COMPOSANT MULTICOUCHE

(30) Priorität: 13.02.2007 DE 102007007113
(43) Veröffentlichungstag der Anmeldung: 18.11.2009
(73) Patentinhaber: Epcos AG, 81669 München (DE)
(72) Erfinder: FEICHTINGER, Thomas, 8010 Graz (AT); ENGEL, Günter, 8430 Leibnitz (AT); WISCHNAT, Volker, 8523 Frauental (AT); HÖLBLING, Thomas, 8010 Graz (AT)
(74) Vertreter: Epping - Hermann - Fischer
(86) Internationale Anmeldenummer: PCT/EP2008/051618
(87) Internationale Veröffentlichungsnummer: WO 2008/098903

(56) Entgegenhaltungen:
- EP-A- 0 301 321
- EP-A- 0 827 160
- DE-A1- 2 737 509
- DE-C1- 10 018 377
- DE-C1- 19 634 496

## Beschreibung

Ein elektrisches Vielschicht-Bauelement ist in den Druckschriften DE 10 2004 005 664 A1 und JP 03239303 A beschrieben.

In EP 0 827 160 A1 und DE 100 18 377 C1 sind keramische Vielschichtbauelemente offenbart, bei denen Innenelektroden konstanter Breite in einem keramischen Körper angeordnet und alternierend mit Anschlussmetallisierungen an den Stirnseiten des Körpers verbunden sind.

Das in DE 196 34 496 C1 beschriebene Vielschichtbauelement weist auf der Außenseite eines keramischen Körpers eine hochohmige Schicht auf, die bewirkt, dass der Widerstand zwischen Innenelektroden und Anschlussmetallisierungen größer ist als der Widerstand zwischen gegenpoligen Innenelektroden.

In EP 0 301 321 A1 ist die Herstellung eines keramischen Vielschichtbauelementes beschrieben, bei der durch die Kontraktion des abgekühlten Metalles der Metallbelegungen an den Seitenflächen des keramischen Körpers von Metall freie Räume entstehen.

Eine zu lösende Aufgabe besteht darin, ein elektrisches Bauelement anzugeben, das einen besonders großen aktiven Bereich aufweist. Außerdem soll ein zugehöriges Herstellungsverfahren angegeben werden.

Diese Aufgabe wird mit dem Vielschicht-Bauelement mit den Merkmalen des Anspruchs 1 beziehungsweise mit dem Verfahren zur Herstellung eines Vielschicht-Bauelements mit den Merkmalen des Anspruchs 11 gelöst.

Es wird ein Vielschicht-Bauelement mit einem Körper angegeben, in dem mindestens eine erste Innenelektrode und mindestens eine zweite Innenelektrode angeordnet ist, wobei diese Innenelektroden einen Überlappungsbereich aufweisen, der sich auf mindestens einer Seite bis zur Oberfläche des Körpers erstreckt.

Das angegebene Bauelement zeichnet sich durch eine besonders hohe Kapazität aus, da die Grundfläche des Körpers auf eine effiziente Art und Weise zur Bildung eines Kapazitätselements ausgenützt ist. Der Kapazitätswert steigt mit zunehmender Fläche der überlappenden Elektroden.

Der Körper weist vorzugsweise Keramikschichten auf, zwischen denen die Innenelektroden angeordnet sind. Die Keramikschichten können dielektrisch sein. Sie können beispielsweise piezoelektrisch sein. Die Keramikschichten können auch in mindestens einem Temperaturbereich elektrisch leitfähig sein.

Die erste und zweite Innenelektrode weist auf die Oberfläche des Körpers treffende Außenkanten auf, die mittels einer elektrisch isolierenden Passivierungsschicht bedeckt sind. Dies trifft für mindestens eine Seitenfläche des Körpers zu. Möglich ist auch, dass die Außenkanten von ersten und zweiten Innenelektroden auf mindestens zwei Seitenflächen des Körpers auf die Oberfläche des Körpers treffen.

Die Passivierungsschicht überdeckt zumindest einen Teil des Körpers, in einer Variante den gesamten Körper, und schützt insbesondere bis zur Oberfläche des Körpers reichende Innenelektroden vor Feuchte und sonstigen schädlichen Umwelteinflüssen. Besonders vorteilhaft ist die Variante, in der die Passivierungsschicht den Körper vollflächig bedeckt.

In einer vorteilhaften Variante weist der Körper zwei parallel zueinander ausgerichtete erste Seitenflächen und zwei parallel zueinander ausgerichtete zweite Seitenflächen auf. Die mindestens eine erste Innenelektrode ist an eine erste Außenelektrode und die mindestens eine zweite Innenelektrode an eine zweite Außenelektrode angeschlossen. Die Außenelektroden sind auf mindestens einer der ersten Seitenflächen des Körpers angeordnet. Der Überlappungsbereich der ersten und zweiten Innenelektroden erstreckt sich bis zu mindestens einer der zweiten Seitenflächen des Körpers. Der Überlappungsbereich erstreckt sich in einer Variante bis zu den beiden zweiten Seitenflächen des Körpers.

In einer vorteilhaften Variante ist im Körper mindestens eine dritte Innenelektrode und mindestens eine vierte Innenelektrode angeordnet, wobei diese Innenelektroden einen Überlappungsbereich aufweisen, der sich auf mindestens einer Seite bis zur Oberfläche des Körpers erstreckt.

Die mindestens eine dritte und vierte Innenelektrode weisen jeweils auf die Oberfläche des Körpers treffende Außenkanten auf, die vorzugsweise mittels der Passivierungsschicht bedeckt sind. Für die dritte und vierte Innenelektrode gilt im Übrigen die Beschreibung der ersten und zweiten Innenelektrode.

Eine erste Innenelektrode und eine dritte Innenelektrode können nebeneinander in einer ersten Ebene angeordnet sein, wobei eine zweite Innenelektrode und eine vierte Innenelektrode nebeneinander in einer zweiten Ebene angeordnet sind. Die mindestens erste und zweite Innenelektroden bilden - zusammen mit den zwischen den ersten und zweiten Innenelektroden liegenden Keramikschichten - eine erste Funktionseinheit. Die mindestens eine dritte und vierte Innenelektroden bilden - zusammen mit den zwischen den dritten und vierten Innenelektroden liegenden Keramikschichten - eine zweite Funktionseinheit, die von der ersten Funktionseinheit durch einen Trennbereich getrennt und vorzugsweise elektrisch von ihr isoliert ist.

Im Körper können im Prinzip mehr als nur zwei Funktionseinheiten integriert sein. Unter einer Funktionseinheit ist beispielsweise ein Kapazitätselement oder ein Widerstandselement, vorzugsweise ein Varistorelement, zu verstehen, das im Körper des Bauelements integriert ist.

Die Innenelektroden weisen jeweils vorzugsweise mindestens eine Aussparung in mindestens einem Eckbereich des Körpers auf, da Eckbereiche ein erhöhtes Risiko von Rissbildung haben, welche dann elektrische Eigenschaften der Funktionseinheit beeinflussen kann.

In einer Variante sind mehrere Innenelektroden der jeweiligen Sorte, also mindestens zwei erste Innenelektroden und mindestens zwei zweite Innenelektroden, ggf. zusätzlich mindestens zwei dritte Innenelektroden und mindestens zwei vierte Innenelektroden, vorgesehen. Die Innenelektroden der jeweiligen Sorte sind durch eine ihnen zugeordnete Außenelektrode leitend miteinander verbunden.

Die Innenelektroden können beispielsweise die folgenden Metalle oder Metalllegierungen enthalten: Ag, AgPd, AgPt, Pt, Cu, Ni.

Für jede Sorte der Innenelektroden ist vorzugsweise mindestens eine eigene Außenelektrode vorgesehen. Die Außenelektrode ist von außen zugänglich und dient zur Kontaktierung des Bauelements von außen.

Die Außenelektrode ist vorzugsweise zumindest teilweise auf einer Seitenfläche des Bauelements, z. B. auf einer Seitenfläche des Körpers, angeordnet. Randbereiche der Außenelektrode können auch auf der Oberseite und/oder der Unterseite des Körpers angeordnet sein. Zumindest ein Teil der Außenelektrode kann auch auf der Passivierungsschicht angeordnet sein.

Der Körper enthält in einer Variante Varistorkeramik. Die Varistorkeramik kann beispielsweise ZnO-Bi, ZnO-Pr oder weitere geeignete Materialien enthalten.

Der Körper kann auch Kondensatorkeramik enthalten. Als Kondensatorkeramik kommen beispielsweise die folgenden Keramiken in Betracht: NP0, X7R, X8R, Z5U. Diese Angaben beziehen sich auf Temperaturklassen von Keramikmaterialien. Der Körper umfasst in einer vorteilhaften Variante mindestens eine Schicht aus Varistorkeramik und mindestens eine Schicht aus Kondensatorkeramik.

Die Funktionseinheit kann beispielsweise als eine Vielschicht-Kapazität ausgebildet sein. Die Funktionseinheit kann alternativ als ein Vielschicht-Widerstand ausgebildet sein. Die Funktionseinheit kann auch eine Kapazität und einen Widerstand umfassen, die leitend miteinander verbunden sind.

Die Passivierungsschicht enthält in einer Variante Glas. Die Passivierungsschicht kann im Prinzip ein Keramikmaterial enthalten.

In einer weiteren Ausführungsform enthält die Passivierungsschicht das gleiche Keramikmaterial wie der Körper. Bevorzugt besteht die Passivierungsschicht aus der gleichen Keramik wie der Körper.

Die Passivierungsschicht bedeckt zumindest den Bereich der Seitenfläche des Körpers, in dem sich die Innenelektroden bis zum Rand des Körpers erstrecken und ohne die Passivierungsschicht frei lägen. Die Passivierungsschicht kann auch den ganzen Körper bedecken. Ein Teil der Passivierungsschicht kann unterhalb von Außenelektroden angeordnet sein, wobei die Passivierungsschicht zwischen den Innenelektroden der jeweiligen Sorte und der diese leitend verbindenden Außenelektrode durchkontaktiert ist.

Die ersten Innenelektroden sind mit einer ersten Außenelektrode leitend verbunden und von einer zweiten Außenelektrode beabstandet sowie elektrisch isoliert. Die zweiten Innenelektroden sind mit der zweiten Außenelektrode leitend verbunden und von der ersten Außenelektrode beabstandet sowie elektrisch isoliert. Dies gilt in entsprechender Weise für dritte und vierte Innenelektroden und eine dritte und vierte Außenelektrode.

In einer vorteilhaften Variante weist jede Innenelektrode einen Bereich mit verringerter Breite auf, der zur Außenelektrode gewandt und an diese angeschlossen ist.

Das angegebene Bauelement kann beispielsweise in einem Verfahren mit den folgenden Schritten erzeugt werden. Zunächst werden Keramikfolien mit einer leitfähigen Paste, beispielsweise einer Metallpaste, vorzugsweise in einem Siebdruckverfahren bedruckt. Die bedruckten Keramikfolien werden übereinander gestapelt und laminiert. Der dabei gebildete Stapel wird verpresst, entkohlt und gesintert. Der Stapel kann vor der Entkohlung oder nach dem Sintern zur Bildung von mehreren Vorläufer-Bauelementen vereinzelt. Jedes Vorläufer-Bauelement weist einen Körper auf.

In einer Variante kann die für die Innenelektroden verwendete Paste einen höheren Sinterschwund aufweisen, als die Keramikfolien. Dadurch ziehen sich die Innenelektroden während des Sintervorgangs zurück. Anschließend werden die Innenelektroden durch Material der Passivierungsschicht nach Außen hin verschlossen. Alternativ können die entstandenen Räume beim Auftragen der Passivierungsschicht mit aufgefüllt werden. Es ist auch möglich, dass sich die Innenelektroden bereits vor dem Sintern soweit zurückziehen, dass sie mit versintert werden, also durch die Keramikfolien während des Sinterns nach außen hin verschlossen werden.

Die Vorläufer-Bauelemente werden zum Freilegen von Innenelektroden gescheuert, geätzt oder einem ähnlichen Verfahren unterzogen. Insbesondere werden dabei Bereiche von Innenelektroden freigelegt, die zum Anschließen an die Außenelektroden vorgesehen sind.

Der Körper des jeweiligen Vorläufer-Bauelements wird passiviert. Dabei wird auf seiner Oberfläche eine elektrisch isolierende Passivierungsschicht erzeugt. Dieser Schritt erfolgt in einer Variante nach den Freilegen von Innenelektroden. Alternativ ist es möglich, die Passivierungsschicht vor dem Entkohlen aufzutragen und sie zusammen mit dem Körper mitzusintern.

Vorzugsweise nach der Passivierung werden z. B. in einem Tauchverfahren Außenelektroden auf Seitenflächen des Körpers erzeugt. Die Außenelektroden können aber auch vor der Passivierung erzeugt werden. Der Körper wird in eine leitende Paste getaucht, die danach getrocknet und eingebrannt wird.

Die Passivierungsschicht kann beispielsweise in einem Sprühverfahren auf den Körper aufgetragen werden. Dabei wird eine relativ dünne Schicht mit homogener Dicke erzeugt. Die Dicke der Passivierungsschicht ist vorzugsweise unterhalb von 20 µm gewählt. Eine ausreichend dünne Schicht wird beim Einbrennen von Außenelektroden in Bereichen, die zwischen der Außenelektrode und den zu ihr gewandten Innenelektroden liegt, durchbrochen, so dass zwischen jeder Innenelektrode und der ihnen zugeordneten Außenelektrode eine leitende Verbindung entsteht.

Die Außenelektroden können durch mindestens eine weitere Schicht bedeckt werden. Vorzugsweise wird dabei in einem galvanischen Verfahren mindestens eine Schicht aufgetragen, die Ag, Pt und/oder Ni enthält. Die oberste Schicht kann durch eine lötbare Schicht gebildet sein.

Die Außenelektroden können beispielsweise die folgenden Metalle oder Metalllegierungen enthalten: Ag, AgPd, AgPt, Pt, Cu, Ni.

Im Folgenden wird das angegebene Bauelement und seine vorteilhaften Ausgestaltungen anhand von schematischen und nicht maßstabgetreuen Figuren erläutert. Es zeigen:
Figuren 1A, 1B Draufsicht auf verschiedene Metallisierungsebenen eines Bauelements gemäß der ersten Ausführungsform;
Figur 1C das Bauelement gemäß der Figuren 1A, 1B in einem ersten Querschnitt;
Figur 1D das Bauelement gemäß der Figuren 1A, 1B in einem zweiten Querschnitt;
Figuren 2A, 2B Draufsicht auf verschiedene Metallisierungsebenen eines Bauelements gemäß der zweiten Ausführungsform;
Figur 2C, 2D das Bauelement gemäß der Figuren 2A, 2B in einem ersten und zweiten Querschnitt;
Figuren 3A, 3B Draufsicht auf verschiedene Metallisierungsebenen eines Bauelements mit zwei Funktionseinheiten;
Figuren 3C, 3D das Bauelement gemäß der Figuren 3A, 3B in einem ersten und zweiten Querschnitt;
Figuren 4A, 4B Draufsicht auf verschiedene Metallisierungsebenen eines Bauelements mit zwei Funktionseinheiten und einer Passivierungsschicht, die den gesamten Körper bedeckt;
Figuren 4C, 4D das Bauelement gemäß der Figuren 4A, 4B in einem ersten und zweiten Querschnitt.

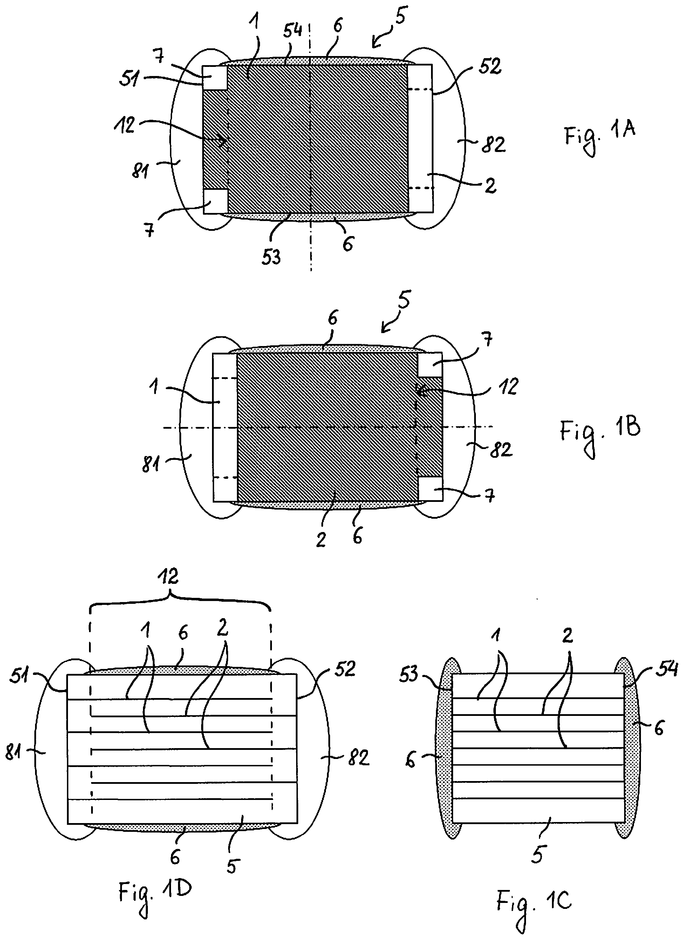

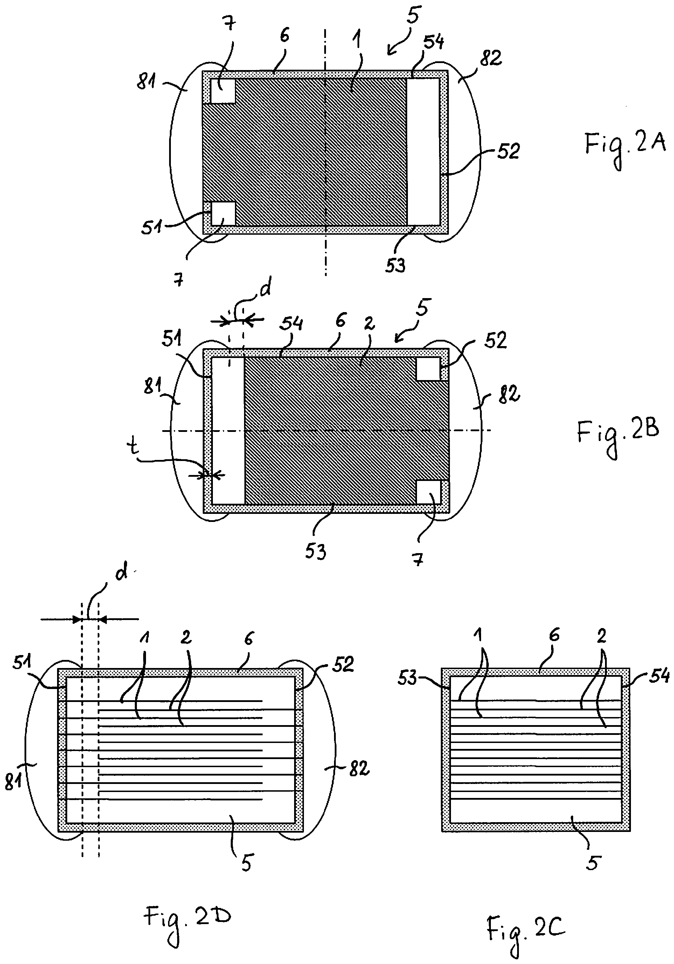

In den Figuren 1A bis 1D ist eine erste Ausführungsform des Bauelements mit einer Funktionseinheit vorgestellt. Die in den Figuren 1C und 1D gezeigten Querschnitte erfolgen entlang gestrichelter Linien, die in den Figuren 1A und 1B zu sehen sind. Dies gilt in entsprechender Weise auch für Figuren 2A bis 2D, 3A bis 3D und 4A bis 4D.

Das Bauelement weist einen Körper 5 auf. Im Körper 5 sind erste Innenelektroden 1 und zweite Innenelektroden 2 angeordnet. Die ersten Innenelektroden 1 sind mittels einer ersten Außenelektrode 81 leitend miteinander verbunden. Die zweiten Innenelektroden 2 sind mittels einer zweiten Außenelektrode 82 leitend miteinander verbunden und elektrisch von den ersten Innenelektroden isoliert. Erste und zweite Innenelektroden sind in abwechselnder Reihenfolge übereinander angeordnet und bilden einen Elektrodenstapel. Der Elektrodenstapel und zwischen den Innenelektroden liegende Keramikschichten des Körpers bilden eine Funktionseinheit.

Der Körper weist erste Seitenflächen 51, 52 auf, die parallel zueinander ausgerichtet sind. Der Körper weist außerdem zweite Seitenflächen 53, 54 auf, die parallel zueinander und senkrecht zu den ersten Seitenflächen 51, 52 ausgerichtet sind.

Die Außenelektroden 81, 82 sind hauptsächlich auf den Seitenflächen 51, 52 des Körpers angeordnet. Teile von Außenelektroden sind aber auch auf der Unterseite und der Oberseite des Körpers angeordnet.

Im Überlappungsbereich 12 ist ein Bereich der ersten Innenelektrode in vertikaler Richtung gegenüber einem Bereich der zu ihr gewandten zweiten Innenelektroden angeordnet, siehe Figur 1D. Dieser Bereich bildet ein aktives Volumen der Funktionseinheit, beispielsweise ein Vielschicht-Kapazitätselement oder ein Vielschicht-Widerstandselement.

Der Überlappungsbereich 12 erstreckt sich bis zu den zweiten Seitenflächen 53, 54 des Körpers 5. Die Kanten der Innenelektroden 1, 2 reichen also bis zu den Seitenflächen 53, 54. Diese offen liegenden Kanten sind mittels Passivierungsschichten 6 überdeckt.

Jede erste Innenelektrode 1 weist einen Bereich mit verringerter Breite auf, der zur ersten Außenelektrode 81 gewandt und an diese angeschlossen ist. Jede zweite Innenelektrode 2 weist einen Bereich mit verringerter Breite auf, der zur zweiten Außenelektrode 82 gewandt und an diese angeschlossen ist. Zur Bildung des Bereichs mit verringerter Breite sind in Eckbereichen Ausnehmungen 7 der Innenelektroden 1, 2 vorgesehen.

Die erste Innenelektrode 1 ist in einem Abstand von der zweiten Außenelektrode 82 angeordnet. Die zweite Innenelektrode 2 ist in einem Abstand von der ersten Außenelektrode 81 angeordnet.

Die Außenelektroden 81, 82 können in einem Tauchverfahren erzeugt werden. Die Passivierungsschichten 6 können auf den dafür vorgesehenen Bereich der zweiten Seitenflächen 53, 54 in einem Siebdruckverfahren unter Verwendung einer Maske aufgetragen werden.

In den Figuren 2A bis 2D ist eine zweite Ausführungsform des Bauelements mit einer Funktionseinheit vorgestellt. Im Unterschied zur vorstehend erläuterten Variante bedeckt hier die Passivierungsschicht 6 den Körper 5 vollflächig. Die Passivierungsschicht 6 ist nur zur Verbindung zwischen den Innenelektroden und der ihnen zugeordneten Außenelektrode durchbrochen bzw. durchkontaktiert. Jede Durchkontaktierung ist dabei maximal so groß wie der Querschnitt des Bereichs mit verringerter Breite der jeweiligen Innenelektrode.

Da eine dünne Passivierungsschicht im Bereich der offen liegenden Kanten der Innenelektroden durchbrochen wird, wird vorzugsweise der Abstand d zwischen einer Innenelektrode, in Fig. 2B der Innenelektrode 2, und der Außenelektrode der anderen Polarität, in diesem Fall der Außenelektrode 81, überall größer als die Dicke t der Passivierungsschicht 6 gewählt. Dies gilt für alle zweite Innenelektroden 2 und in entsprechender Weise auch für die Innenelektroden 1 und die Außenelektrode 82.

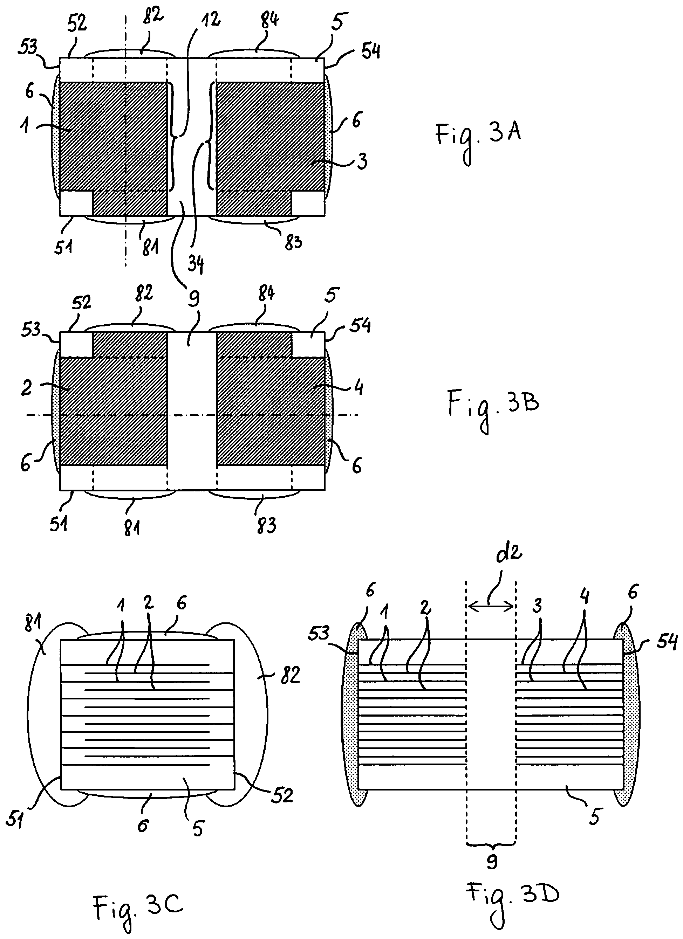

In den Figuren 3A bis 3D ist eine Ausführungsform des Bauelements vorgestellt, bei dem zwei Funktionseinheiten in einem gemeinsamen Körper 5 angeordnet sind. Zwischen den Funktionseinheiten ist ein elektrisch isolierender Trennbereich 9 angeordnet. Die Breite d2 des Trennbereichs 9 ist vorzugsweise größer als der Abstand zwischen einer ersten Innenelektrode und der nächsten zweiten Innenelektrode. Der Abstand zwischen den Funktionseinheiten ist also vorzugsweise größer als die Dicke einer Keramikschicht.

Die erste Außenelektrode 81 der ersten Funktionseinheit sowie die erste Außenelektrode 83 der zweiten Funktionseinheit ist auf der ersten Seitenfläche 51 des Körpers angeordnet. Die zweite Außenelektrode 82 der ersten Funktionseinheit sowie die zweite Außenelektrode 84 der zweiten Funktionseinheit ist auf der weiteren ersten Seitenfläche 52 des Körpers angeordnet.

Für die erste Funktionseinheit, die in der Figur 3A, 3B links angeordnet ist, gilt das in Zusammenhang mit den Figuren 1A bis 1D Gesagte.

Für die zweite Funktionseinheit, die in der Figur 3A, 3B rechts angeordnet ist, gilt in entsprechender Weise das in Zusammenhang mit den Figuren 1A bis 1D Gesagte. Die zweite Funktionseinheit weist erste Innenelektroden 3 und zweite Innenelektroden 4 auf, die sich in einem Überlappungsbereich 34 überlappen.

Im Unterschied zur Variante gemäß den Figuren 1A bis 1D erstreckt sich in diesem Fall der jeweilige Überlappungsbereich nur auf einer Seite bis zur Oberfläche des Körpers. Der Überlappungsbereich 12 reicht bis zur zweiten Seitenfläche 53 und der Überlappungsbereich 34 bis zur zweiten Seitenfläche 54. Die offen liegenden Kanten der Innenelektroden 3, 4 sind auch durch eine Passivierungsschicht 6 bedeckt.

Im Übrigen trifft auch für die in den Figuren 3A bis 3D gezeigte Variante die Beschreibung der Figur 1A bis 1D zu.

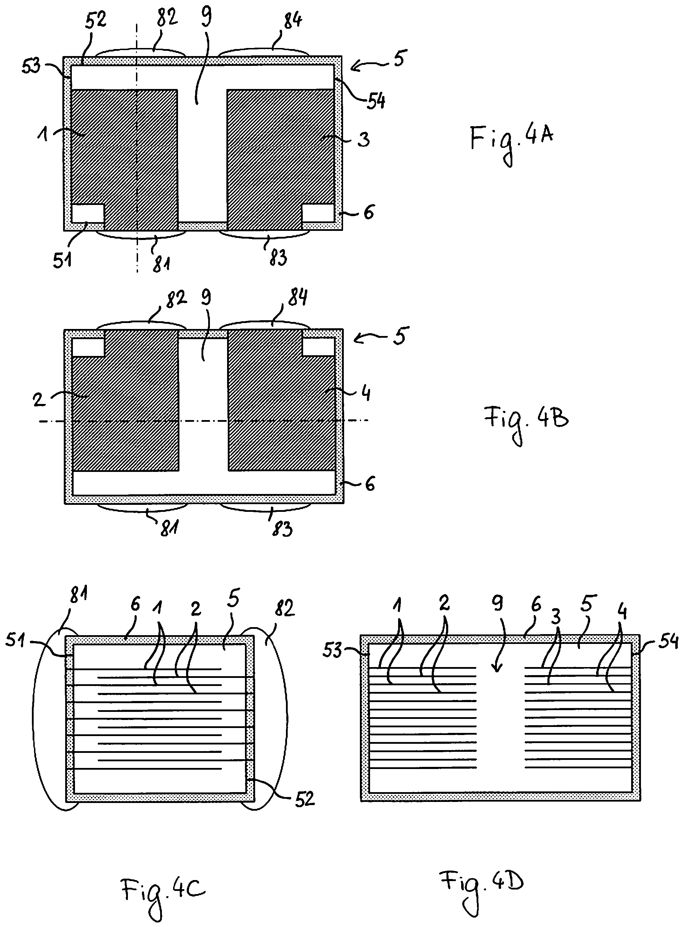

In den Figuren 4A bis 4D ist ein Bauelement mit zwei Funktionseinheiten gezeigt, wobei sich der Überlappungsbereich der Innenelektroden jeder Funktionseinheit nur bis zu einer zweiten Seitenfläche 53 bzw. 54 des Körpers 5 erstreckt. Der Körper ist durch die Passivierungsschicht 6 vollflächig bedeckt.

Die in den Figuren 4A bis 4D vorgestellte Variante stellt eine Kombination der Varianten gemäß den Figuren 2A bis 2D und 3A bis 3D. Für diese Ausführungsform gilt also die Beschreibung der vorstehend erläuterten Varianten.

Die Ausgestaltungsmöglichkeiten des angegebenen Bauelements sind durch die in den Figuren erläuterten Varianten oder erwähnte Materialangaben nicht erschöpft. Insbesondere kann die Grundform des Körpers, der Innenelektroden, der Außenelektroden beliebig sein.

### Bezugszeichenliste

1 erste Innenelektrode
12 Überlappungsbereich der Elektroden 1, 2
2 zweite Innenelektrode
3 dritte Innenelektrode
4 vierte Innenelektrode
5 Körper
51, 52 erste Seitenflächen des Körpers
53, 54 zweite Seitenflächen des Körpers
6 Passivierungsschicht
7 Aussparung
81 erste Außenelektrode
82 zweite Außenelektrode
9 Trennbereich
d Abstand zwischen der Innenelektrode und der Außenelektrode der anderen Polarität
d2 Breite des Trennbereichs 9
t Dicke der Passivierungsschicht 6

## Patentansprüche

1. Vielschicht-Bauelement
- mit einem Körper (5), in dem mindestens eine erste Innenelektrode (1) und mindestens eine zweite Innenelektrode (2) angeordnet ist,
- wobei diese Innenelektroden (1, 2) einen Überlappungsbereich (12) aufweisen,
- mit zwei parallel zueinander ausgerichteten ersten Seitenflächen (51, 52) und zwei parallel zueinander ausgerichteten zweiten Seitenflächen (53, 54) des Körpers, und
- mit einer ersten Außenelektrode (81) und einer zweiten Außenelektrode (82) auf den ersten Seitenflächen (51, 52),
wobei
- jede erste Innenelektrode (1) einen Bereich mit verringerter Breite aufweist, der zur ersten Außenelektrode (81) gewandt und an diese angeschlossen ist, und jede zweite Innenelektrode (2) einen Bereich mit verringerter Breite aufweist, der zur zweiten Außenelektrode (82) gewandt und an diese angeschlossen ist, und
- jede der ersten und zweiten Innenelektroden (1, 2) sich mindestens bis zu einer der zweiten Seitenflächen (53, 54) des Körpers (5) erstreckt und eine Außenkante der Innenelektrode (1, 2) dort von einer Passivierungsschicht (6) bedeckt ist,
- wobei die ersten und zweiten Innenelektroden (1, 2) zur Bildung des Bereiches mit verringerter Breite jeweils eine Aussparung (7) in einem Eckbereich des Körpers (5) aufweisen.

2. Vielschicht-Bauelement nach Anspruch 1, wobei im Körper (5) mindestens eine dritte Innenelektrode (3) und mindestens eine vierte Innenelektrode (4) angeordnet ist, wobei diese Innenelektroden (3, 4) einen Überlappungsbereich (34) aufweisen, der sich auf mindestens einer Seite bis zur Oberfläche des Körpers (5) erstreckt, wobei erste und zweite Innenelektroden eine erste Funktionseinheit und dritte und vierte Innenelektrode eine zweite Funktionseinheit bilden, die von der ersten Funktionseinheit durch einen Trennbereich (9) getrennt ist.

3. Vielschicht-Bauelement nach Anspruch 2, wobei die jeweilige erste und dritte Innenelektrode (1, 3) in einer Ebene angeordnet sind, wobei die jeweilige zweite und vierte Innenelektrode (2, 4) in einer Ebene angeordnet sind.

4. Vielschicht-Bauelement nach Anspruch 2 oder 3, wobei die dritte und vierte Innenelektrode (3, 4) auf die Oberfläche des Körpers (5) treffende Außenkanten aufweisen, die mittels der Passivierungsschicht (6) bedeckt sind.

5. Vielschicht-Bauelement nach einem der Ansprüche 1 bis 4, wobei der Körper (5) Varistorkeramik enthält.

6. Vielschicht-Bauelement nach einem der Ansprüche 1 bis 4, wobei der Körper (5) Kondensatorkeramik enthält.

7. Vielschicht-Bauelement nach einem der Ansprüche 1 bis 6, wobei die Passivierungsschicht (6) Glas enthält.

8. Vielschicht-Bauelement nach einem der Ansprüche 1 bis 6, wobei die Passivierungsschicht (6) das gleiche Keramikmaterial enthält wie der Körper (5).

9. Vielschicht-Bauelement nach einem der Ansprüche 1 bis 8, wobei ein Teil der Passivierungsschicht (6) zwischen dem Körper (5) und einer Außenelektrode (81, 82) angeordnet ist, wobei die Passivierungsschicht (6) zwischen dieser Außenelektrode (81, 82) und den mit dieser Außenelektrode (81, 82) leitend verbundenen Innenelektroden (1, 2, 3, 4) durchkontaktiert ist.

10. Vielschicht-Bauelement nach einem der Ansprüche 1 bis 9, wobei der Abstand (d) zwischen den ersten Innenelektroden (1) und der zweiten Außenelektrode (82) und der Abstand (d) zwischen den zweiten Innenelektroden (2) und der ersten Außenelektrode (81) überall größer ist als die Dicke (t) der Passivierungsschicht (6).

11. Verfahren zur Herstellung eines Vielschicht-Bauelements nach Anspruch 1, aufweisend folgende Schritte:
- auf Keramikfolien wird eine Innenelektrodenpaste aufgebracht, mit der Innenelektroden (1, 2) gebildet werden,
- die Keramikfolien werden aufeinander gestapelt und laminiert, so dass ein Körper (5) mit zwei parallel zueinander ausgerichteten ersten Seitenflächen (51, 52) und zwei parallel zueinander ausgerichteten zweiten Seitenflächen (53, 54) gebildet wird,
- der Stapel aus Keramikfolien wird entkohlt, und
- der Stapel aus Keramikfolien wird gesintert,
wobei
- jede Innenelektrode (1, 2) so ausgebildet wird, dass sie einen Bereich mit verringerter Breite aufweist und sich in einem Überlappungsbereich (12) bis zu mindestens einer der zweiten Seitenflächen (53, 54) des Körpers (5) erstreckt,
- eine Passivierungsschicht (6) auf den zweiten Seitenflächen (53, 54) des Körpers (5) so aufgebracht wird, dass Außenkanten der Innenelektroden (1, 2) von der Passivierungsschicht (6) bedeckt werden, und
- Außenelektroden (81, 82) auf den ersten Seitenflächen (51, 52) des Körpers (5) angeordnet und eingebrannt werden, so dass die Passivierungsschicht (6) zwischen den Außenelektroden (81, 82) und den Bereichen mit verringerter Breite der Innenelektroden (1, 2) durchbrochen wird und jede Innenelektrode (1, 2) mit einer der Außenelektroden (81, 82) leitend verbunden wird.

12. Verfahren nach Anspruch 11, wobei die Passivierungsschicht (6) in einem Sprühverfahren auf den Körper (5) aufgebracht wird.

13. Verfahren nach Anspruch 11 oder 12, wobei die Passivierungsschicht (6) in einer Dicke von unterhalb 20 *µ*m auf den Körper (5) aufgebracht wird.

14. Verfahren nach Anspruch 11, wobei die durch das Sintern zurückgezogenen Innenelektroden (1, 2) mittels Material der Passivierungsschicht (6) nach Außen verschlossen werden.

15. Verfahren nach Anspruch 11, wobei die Passivierungsschicht (6) vor dem Sintern des Stapels aufgebracht wird.

## Claims

1. Multilayer device
- having a body (5), in which at least one first internal electrode (1) and at least one second internal electrode (2) are arranged,
- wherein said internal electrodes (1, 2) have an overlap region (12),
- having two first side faces (51, 52) having mutually parallel orientation and two second side faces (53, 54) having mutually parallel orientation of the body, and
- having a first external electrode (81) and a second external electrode (82) on the first side faces (51, 52), wherein
- each first internal electrode (1) has a region of reduced width that faces the first external electrode (81) and is connected thereto, and each second internal electrode (2) has a region of reduced width that faces the second external electrode (82) and is connected thereto, and
- each of the first and second internal electrodes (1, 2) extends at least up to one of the second side faces (53, 54) of the body (5) and an outer edge of the internal electrode (1, 2) is covered there by a passivation layer (6),
- wherein the first and second internal electrodes (1, 2) have in each case a cutout (7) in a corner region of the body (5) for forming the region of reduced width.

2. Multilayer device according to Claim 1, wherein at least one third internal electrode (3) and at least one fourth internal electrode (4) are arranged in the body (5), wherein said internal electrodes (3, 4) have an overlap region (34) which extends on at least one side up to the surface of the body (5), wherein first and second internal electrodes form a first function unit and third and fourth internal electrodes form a second function unit, which is separated from the first function unit by way of a separating region (9).

3. Multilayer device according to Claim 2, wherein the respective first and third internal electrodes (1, 3) are arranged in a plane, wherein the respective second and fourth internal electrodes (3, 4) are arranged in a plane.

4. Multilayer device according to Claim 2 or 3, wherein the third and fourth internal electrodes (3, 4) have outer edges that meet the surface of the body (5) and are covered by way of the passivation layer (6).

5. Multilayer device according to one of Claims 1 to 4, wherein the body (5) contains varistor ceramic.

6. Multilayer device according to one of Claims 1 to 4, wherein the body (5) contains capacitor ceramic.

7. Multilayer device according to one of Claims 1 to 6, wherein the passivation layer (6) contains glass.

8. Multilayer device according to one of Claims 1 to 6, wherein the passivation layer (6) contains the same ceramic material as the body (5).

9. Multilayer device according to one of Claims 1 to 8, wherein part of the passivation layer (6) is arranged between the body (5) and an external electrode (81, 82), wherein the passivation layer (6) is throughcontacted between said external electrode (81, 82) and the internal electrodes (1, 2, 3, 4) that are conductively connected to said external electrode (81, 82).

10. Multilayer device according to one of Claims 1 to 9, wherein the distance (d) between the first internal electrodes (1) and the second external electrode (82) and the distance (d) between the second internal electrodes (2) and the first external electrode (81) is greater throughout than the thickness (t) of the passivation layer (6).

11. Method for producing a multilayer device according to Claim 1, having the steps of:
- applying an internal electrode paste, with which internal electrodes (1, 2) are formed, onto ceramic films,
- stacking the ceramic films on top of one another and laminating them such that a body (5) having two first side faces (51, 52) having mutually parallel orientation and two second side faces (53, 54) having mutually parallel orientation is formed,
- decarbonizing the stack of ceramic films and
- sintering the stack of ceramic films,
- configuring each internal electrode (1, 2) such that it has a region of reduced width and extends in an overlap region (12) up to at least one of the second side faces (53, 54) of the body (5),
- applying a passivation layer (6) onto the second side faces (53, 54) of the body (5) such that outer edges of the internal electrodes (1, 2) are covered by the passivation layer (6), and
- arranging external electrodes (81, 82) on the first side faces (51, 52) of the body (5) and firing them such that the passivation layer (6) between the external electrodes (81, 82) and the regions of the internal electrodes (1, 2) of reduced width is punctured and each internal electrode (1, 2) is conductively connected to one of the external electrodes (81, 82).

12. Method according to Claim 11, wherein the passivation layer (6) is applied onto the body (5) in a spray method.

13. Method according to Claim 11 or 12, wherein the passivation layer (6) is applied onto the body (5) with a thickness of less than 20 µm.

14. Method according to Claim 11, wherein the internal electrodes (1, 2) which have retracted on account of the sintering are closed with respect to the outside by way of material of the passivation layer (6).

15. Method according to Claim 11, wherein the passivation layer (6) is applied before the stack is sintered.

## Revendications

1. Composant multicouche comportant :
- un corps (5) dans lequel sont disposées au moins une première électrode intérieure (1) et au moins une deuxième électrode intérieure (2),
- dans lequel lesdites électrodes intérieures (1, 2) présentent une zone de chevauchement (12),
- deux premières surfaces latérales (51, 52) orientées parallèlement l'une à l'autre et deux deuxièmes surfaces latérales (53, 54) du corps orientées parallèlement l'une à l'autre, et
- une première électrode extérieure (81) et une deuxième électrode extérieure (82) sur les premières surfaces latérales (51, 52), dans lequel
- chaque première électrode intérieure (1) présente une zone de largeur réduite qui est tournée vers la première électrode extérieure (81) et est connectée à celle-ci, et chaque deuxième électrode intérieure (2) présente une zone de largeur réduite qui est tournée vers la deuxième électrode extérieure (82) et est connectée à celle-ci, et
- chacune des première et deuxième électrodes intérieures (1, 2) s'étend au moins jusqu'à l'une des deuxièmes surfaces latérales (53, 54) du corps (5) et un bord extérieur de l'électrode intérieure (1, 2) est recouvert à cet emplacement par une couche de passivation (6),
- dans lequel les première et deuxième électrodes intérieures (1, 2) présentent respectivement un évidement (7) dans une zone d'angle du corps (5) pour former la zone de largeur réduite.

2. Composant multicouche selon la revendication 1, dans lequel il est prévu dans le corps (5) au moins une troisième électrode intérieure (3) et au moins une quatrième électrode intérieure (4), dans lequel lesdites électrodes intérieures (3, 4) présentent une zone de chevauchement (34) qui s'étend sur au moins un côté jusqu'à la surface du corps (5), dans lequel les première et deuxième électrodes intérieures forment une première unité fonctionnelle et les troisième et quatrième électrodes intérieures forment une deuxième unité fonctionnelle qui est séparée de la première unité fonctionnelle par une zone de séparation (9).

3. Composant multicouche selon la revendication 2, dans lequel les première et troisième électrodes intérieures (1, 3) respectives sont disposées dans un plan, et dans lequel les deuxième et quatrième électrodes intérieures (2, 4) respectives sont disposées dans un plan.

4. Composant multicouche selon la revendication 2 ou 3, dans lequel les troisième et quatrième électrodes intérieures (3, 4) présentent des bords extérieurs se réunissant sur la surface du corps (5) qui sont recouverts au moyen de la couche de passivation (6).

5. Composant multicouche selon l'une quelconque des revendications 1 à 4, dans lequel le corps (5) contient une céramique de varistance.

6. Composant multicouche selon l'une quelconque des revendications 1 à 4, dans lequel le corps (5) contient une céramique de condensateur.

7. Composant multicouche selon l'une quelconque des revendications 1 à 6, dans lequel la couche de passivation (6) contient du verre.

8. Composant multicouche selon l'une quelconque des revendications 1 à 6, dans lequel la couche de passivation (6) contient le même matériau céramique que le corps (5).

9. Composant multicouche selon l'une quelconque des revendications 1 à 8, dans lequel une partie de la couche de passivation (6) est disposée entre le corps (5) et une électrode extérieure (81, 82), dans lequel la couche de passivation (6) est métallisée entre ladite électrode extérieure (81, 82) et les électrodes intérieures (1, 2, 3, 4) reliées de manière conductrice à la dite électrode extérieure (81, 82).

10. Composant multicouche selon l'une quelconque des revendications 1 à 9, dans lequel la distance (d) entre les premières électrodes intérieures (1) et la deuxième électrode extérieure (82) et la distance (d) entre les deuxièmes électrodes intérieures (2) et la première électrode extérieure (81) est globalement supérieure à l'épaisseur (t) de la couche de passivation (6).

11. Procédé de fabrication d'un composant multicouche selon la revendication 1, comportant les étapes consistant à :
- déposer sur des feuilles de céramique une pâte d'électrode intérieure au moyen de laquelle les électrodes intérieures (1, 2) sont formées,
- empiler et stratifier les unes sur les autres les feuilles de céramique de manière à former un corps (5) ayant deux premières surfaces latérales (51, 52) orientées parallèlement l'une à l'autre et deux deuxièmes surfaces latérales (53, 54) orientées parallèlement l'une à l'autre,
- décarburer l'empilement de feuilles de céramique, et
- fritter l'empilement de feuilles céramiques,
- chaque électrode intérieure (1, 2) étant réalisée de manière à présenter une zone de largeur réduite et à s'étendre dans une zone de chevauchement (12) jusqu'à au moins l'une des deux surfaces latérales (53, 54) du corps (5),
- déposer une couche de passivation (6) sur les deux surfaces latérales (53, 54) du corps (5) de manière à recouvrir les bords extérieurs des électrodes intérieures (1, 2) avec la couche de passivation (6), et
- disposer et cuire des électrodes extérieures (81, 82) sur les premières surfaces latérales (51, 52) du corps (5) de manière à ce que la couche de passivation (6) soit percée entre les électrodes extérieures (81, 82) et les zones de largeur réduite des électrodes intérieures (1, 2) et à relier de manière conductrice chaque électrode intérieure (1, 2) à l'une des électrodes extérieures (81, 82).

12. Procédé selon la revendication 11, dans lequel la couche de passivation (6) est déposée sur le corps (5) par un procédé de pulvérisation.

13. Procédé selon la revendication 11 ou 12, dans lequel la couche de passivation (6) est déposée sur le corps (5) sur une épaisseur inférieure à 20 µm.

14. Procédé selon la revendication 11, dans lequel les électrodes intérieures (1, 2) retirées par le frittage sont refermées vers l'extérieur par le matériau de la couche de passivation (6).

15. Procédé selon la revendication 11, dans lequel la couche de passivation (6) est déposée avant le frittage de l'empilement.
